# EUROPÄISCHE PATENTSCHRIFT

(11) **EP 0 310 938 B1**
(45) Veröffentlichungstag und Bekanntmachung des Hinweises auf die Patenterteilung: **28.12.1994**
(21) Anmeldenummer: 88116045.1
(22) Anmeldetag: 29.09.1988
(51) Int. Cl.: B07B 13/18, A01F 12/44, A01D 41/12

(54) **Trenneinrichtung für eine Erntemaschine**
Separation device for a harvesting machine
Dispositif de séparation pour une moissonneuse

(30) Priorität: 05.10.1987 DE 3733619
(43) Veröffentlichungstag der Anmeldung: 12.04.1989
(73) Patentinhaber: DEERE & COMPANY, Moline, Illinois 61265 (US)
(72) Erfinder: Hagerer, Paul, Dr., D-6660 Zweibrücken (DE); Glaser, Fritz, Dr., D-6660 Zweibrücken (DE); Klimmer, Josef, D-6660 Zweibrücken (DE); Kunze, Reinhard, D-6660 Zweibrücken (DE)
(74) Vertreter: Feldmann, Bernhard

(56) Entgegenhaltungen:
- AT-B- 294 476
- DE-A- 2 903 910
- FR-A- 2 400 319
- US-A- 3 367 496
- US-A- 4 130 223

## Beschreibung

Die Erfindung betrifft eine Trenneinrichtung für eine Erntemaschine, insbesondere für einen Mähdrescher, mit Leitblechen, die schwenkbar auf einer ersten Trenneinheit gelagert sind, über ein gemeinsames Verstellelement miteinander verbunden sind und in Abhängigkeit von Signalen aus einer Regeleinrichtung einen Gutstrom beim Übergang auf eine stromabwärts folgende zweite Trenneinheit umlenken.

Die DE-A-29 03 910 offenbart einen Mähdrescher mit einer Regeleinrichtung, die aus der Windgeschwindigkeit durch die Siebe oder der Belegung des Vorbereitungsbodens mittels optischer, akustischer oder sonstiger Abfühleinrichtungen ein Signal bildet, das dazu verwendet wird, Einstellungen an verschiedenen Komponenten des Mähdreschers zu verändern, so daß der Materialfluß durch den Mähdrescher so gleichmäßig wie möglich erfolgt. Unter anderem wird vorgeschlagen, auf einem Vorbereitungsboden befindliche Leitbleche zu verstellen, damit das zu fördernde Material beim Übergang auf ein nachfolgendes Sieb zu der hangoberen Seite gelenkt wird.

Desgleichen zeigt die SU-A-1119-630 einen Vorbereitungsboden mit schwenkbaren Leitblechen, die über eine Handkurbel und einen Schlitten verstellt werden.

Die der Erfindung zugrunde liegende Aufgabe wird darin gesehen, eine Trenneinrichtung zu schaffen, die auch unter widrigen Umgebungseinflüssen, insbesondere im Bereich eines Vorbereitungsbodens in einem Mähdrescher, zuverlässig und schnell verstellt werden kann.

Diese Aufgabe ist durch die Lehre gemäß dem Patentanspruch 1 auf erfinderische Weise gelöst worden.

Auf diese Weise wird mittels des Motors, der in seiner Leistung nach den zu erwartenden Kraftanforderungen ausgewählt werden kann, eine schnelle Verstellung der Leitbleche bewirkt, wobei die Regelgenauigkeit insbesondere bei einem Elektromotor mit einer entsprechenden Regeleinrichtung auf einem hohen Niveau liegen kann. Das unterhalb der Trenneinrichtung angebrachte Verstellelement befindet sich außerhalb des von dem zu fördernden Gut beaufschlagten Bereichs in einer relativ sauberen Zone, so daß Verstopfungen oder das Fressen von Lagern aufgrund von Erntegutsäften nicht eintritt. Das Verschließen der Schlitze trägt ebenfalls zur Vermeidung der vorgenannten Probleme bei. Dadurch, daß das Verstellelement an der Trenneinheit befestigt ist, ist lediglich ein dieses mit dem Motor verbindendes nachgiebiges Gestänge, z. B. ein Bowdenzug, erforderlich.

Auf diese Weise kann eine gleichmäßige Verteilung des Guts auf bzw. in der Trenneinrichtung stets dann bewirkt werden, wenn tatsächlich eine ungleichmäßige Verteilung vorliegt und nicht schon dann, wenn nur Umstände vorliegen, die zu einer ungleichmäßigen Verteilung führen können. Außerdem kann auch dann eine andere Gutverteilung bewirkt werden, wenn Ursachen vorliegen, die nicht unbedingt zu einer schlechten Gutverteilung führen müssen und die von der seitlichen Neigung der Trenneinrichtung unabhängig sind.

Bezüglich der Anwendung an einem Mähdrescher bedeutet dies, daß bei geringem Getreidedurchsatz und bei nur teilweiser Ausnutzung der maximalen Schnittbreite auch beim Fahren am Hang nicht unbedingt eine ungleiche und nachteilige Verteilung des ausgedroschenen Guts auf der Trenneinrichtung erfolgen muß. Andererseits kann bereits eine falsche Einstellung und Verschleiß an Förderorganen oder an einer Dreschtrommel oder die Nichtausnutzung der maximalen Schnittbreite die ungleichmäßige Beschickung der Trenneinrichtung hervorrufen.

Andere Anwendungsgebiete des erfindungsgemäßen Verfahrens und der erfindungsgemäßen Mittel finden sich z. B. bei Baustellenfahrzeugen, mit deren Hilfe Bauschutt oder Sand gesiebt und gereinigt werden. Auch Sortieranlagen an Vollerntern in der Landwirtschaft, an Müllsortierstraßen und dergleichen können nach den Lehren der verschiedenen Patentansprüche betrieben und hergestellt werden, wobei fallweise auch andere Parameter zur Regelung herangezogen werden können.

In der Zeichnung ist ein nachfolgend näher beschriebenes Ausführungsbeispiel der Erfindung bzw. der zusammengehörenden erfinderischen Mittel dargestellt. Es zeigen:
- Figur 1: ein Schemabild eines Regelkreises für ein erfindungsgemäßes Verfahren zum gleichmäßigen Verteilen eines zu trennenden Guts in einer Trenneinrichtung,
- Figur 2: einen Mähdrescher mit einer erfindungsgemäßen Trenneinrichtung im Schnitt und in schematischer Darstellung,
- Figur 3: eine Trenneinheit der Trenneinrichtung aus Figur 2 in perspektivischer Darstellung und
- Figur 4: die Trenneinheit nach Figur 3 in Draufsicht.

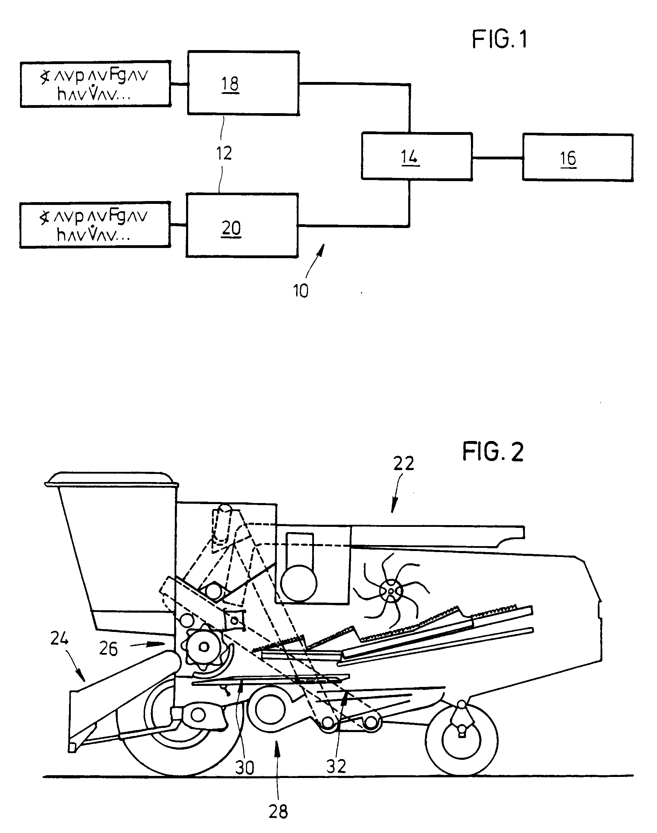

In Figur 1 ist ein Regelkreis 10 mit einer Meßeinrichtung 12, einer Regelvorrichtung 14 und einer Leitvorrichtung 16 gezeigt.

Soweit in den Erläuterungen zu Figur 1 auch auf Bestandteile Bezug genommen wird, die nur in den weiteren Figuren dargestellt sind, geschieht dies der Überschaubarkeit wegen zunächst ohne Angabe der dazugehörigen Bezugszeichen.

Die Meßeinrichtung 12 besteht bei diesem Ausführungsbeispiel aus zwei Sensoren 18 und 20, die verschiedene Parameter eines in einer nicht gezeigten Trenneinrichtung geförderten Gutstromes erfassen, aus ihren Werten digitale oder analoge Signale bilden und sie der Regelvorrichtung 14 zuführen. Diese Sensoren 18, 20 können zur Erfassung einer aus dem Gutstrom in einem bestimmten Bereich resultierenden Flächenlast, Schütthöhe oder Schüttdichte ausgebildet sein. Soll der Gutstrom z. B. nach qualitativen Gesichtspunkten in verschiedene unterschiedliche Teilgutströme unterteilt werden, dann können die Sensoren 18, 20 auch so ausgebildet sein, daß sie die verschiedenen Teilgutströme in ihrer Zusammensetzung, z. B. Reinheitsgrad oder Menge überwachen. Soll mittels der Sensoren 18, 20 nur ein seitlicher Neigungswinkel der Trenneinrichtung direkt erfaßt werden, dann reicht ein einziger Sensor 18 oder 20 aus. In den Fällen aber, in denen über die Schüttdichte, die Schütthöhe, Gutstromverluste und dergleichen eine ungleichmäßige Verteilung des Guts in der Trenneinrichtung festgestellt wird, ist zumindest auf jeder Seite der Trenneinrichtung d. h. mit Bezug auf die Flußrichtung ein Sensor 18, 20 vorzusehen.

Die Sensoren 18, 20 sind von herkömmlicher Bauart und liefern ein elektrisches Ausgangssignal an die Regeleinrichtung 14.

Die Regeleinrichtung 14 ist als Mikroprozessor ausgebildet und kann extern oder intern programmiert werden. Sie ist mit mindestens zwei Eingängen für die Sensoren 18, 20 und mindestens einem Ausgang für die Leiteinrichtung 16 ausgestattet; sind mehrere Leiteinrichtungen 16, 16′, 16˝ .... vorgesehen, dann steigt damit auch die Anzahl der Ausgänge an der Regeleinrichtung 14.

Die Leiteinrichtung 16 enthelt einen in Figur 1 nicht gezeigten Motor von elektrischer, hydraulischer oder pneumatischer Bauart, der direkt oder über Magnetventile elektrisch betätigt wird. Mittels des Motors können Leitbleche, die Förderrichtung oder die Neigung der Förderebene und dergleichen verstellt werden, wie dies später noch beschrieben wird.

Dieser Regelkreis 10 findet Anwendung bei der Regelung der Verteilung eines Gutstromes an einer Trenneinrichtung und funktioniert im Prinzip wie folgt. Die Sensoren 18, 20 erfassen einige oder alle der vorgenannten Parameter, wandeln deren Werte in Eingangssignale für die Regeleinrichtung 14 um und leiten sie dieser zu. In der Regeleinrichtung 14 wird gemäß einem Datenverarbeitungsprogramm aus den Eingangssignalen ein Ausgangssignal für die Leiteinrichtung 16 gebildet, mit dem Ziel, den Motor der Leiteinrichtung 16 derart zu verstellen, daß das Gut in der Trenneinrichtung gleichmäßig verteilt ist, d. h. daß die Werte der an verschiedenen Stellen erfaßten Parameter in Richtung und Betrag übereinstimmen. Stellt der Regelkreis 14 eine derartige Übereinstimmung fest, ist der Regelvorgang beendet.

Figur 2 gibt zeichnerisch eine Erntemaschine 22 in der Art eines Mähdreschers wieder, der in seiner Bauart, abgesehen von seinen erfinderischen Bauteilen, bekannt ist und insoweit nicht oder nur geringfügig beschrieben wird. Für die spezifische Anwendung der vorliegenden Erfindung ist jedoch zu bemerken, daß die Erntemaschine 22 stromaufwärts gelegene Förderorgane 24, eine Ausdreschvorrichtung 26 und eine Trenneinrichtung 28, sowie die zu Fig. 1 genannten Teile enthält.

Wie es hinlänglich bekannt ist, wird mittels der Förderorgane 24 auszudreschendes Gut, z. B. Getreide der Ausdreschvorrichtung 26 zugeliefert, in der es so bearbeitet wird, daß das ausgedroschene Gut der Trenneinrichtung 28 zur weiteren Trennung in zwei Gutströme zugeleitet wird, nämlich in einen qualitativ hochwertigen und gewünschten - das Korn - und einen minderwertigen - die Spreu.

Die Trenneinrichtung 28 enthält in diesem Ausführungsbeispiel eine stromaufwärts und eine stromabwärts gelegene Trenneinheit 30 und 32, die beide der Ausdreschvorrichtung 26 nachgeschaltet und zueinander in Reihe angeordnet sind. Während beide Trenneinheiten 30, 32 als vertikal oszillierende Schwingförderer ausgebildet sind, findet in bzw. auf der ersten Trenneinheit 30 - bei Mähdreschern auch als Vorbereitungsboden bekannt - nur eine Trennung, aber in bzw. auf der zweiten Trenneinheit 32 ein Abscheiden von nicht gewünschtem Gut statt. Die letztgenannte Trenneinheit 32 setzt sich bei Mähdreschern aus Ober- und Untersieb(en) zusammen.

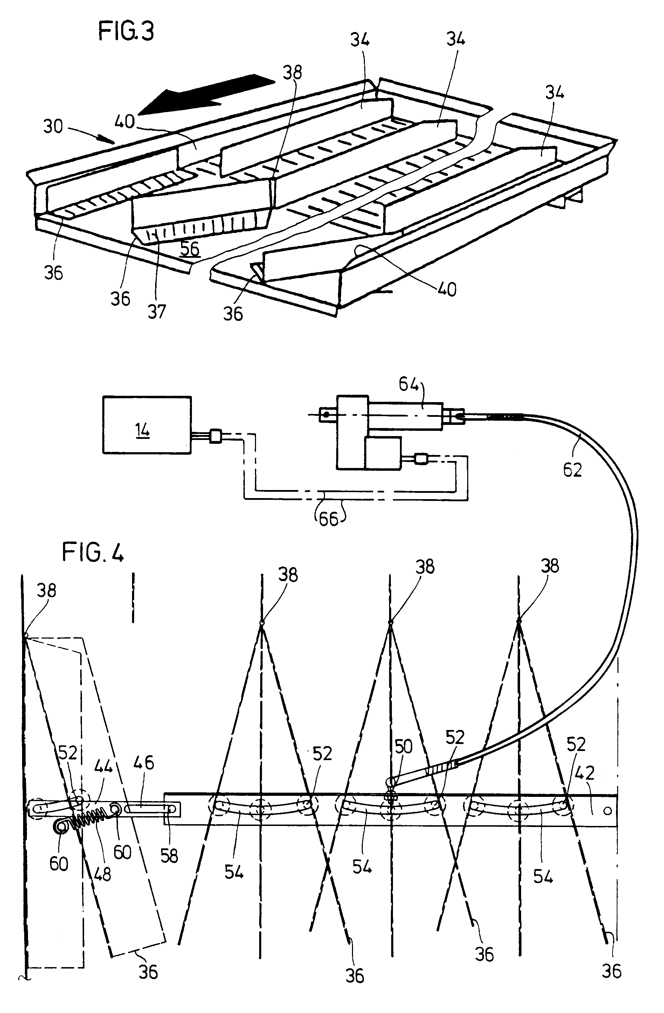

Gemäß Figur 3 ist die stromaufwärts gelegene Trenneinheit 30 als eine austragsseitig offene Wanne ausgebildet und mit starren und beweglichen Leitblechen 34 und 36 versehen, die zum Leiten des Gutstromes durch die Wanne herangezogen werden. Ein seitlich der Trenneinheit 30 gezeigter Pfeil macht die Fluß- und Förderrichtung des Guts durch die Trenneinheit 30 deutlich.

Die starren Leitbleche 34 erstrecken sich parallel zu der theoretischen Förderrichtung der Trenneinheit 30 über ca. 2/3 der Länge der Trenneinheit 30.

Die beweglichen Leitbleche 36 sind mittels Gelenken 38 (siehe auch Fig. 4) horizontal bzw. quer zur Flußrichtung des Gutstromes schwenkbar an den starren Leitblechen 34 gehalten und vermögen so, die Flußrichtung des Gutstroms zu ändern. Ausgenommen den beiden äußeren starren Leitblechen 34, ist jedem starren Leitblech 34 ein bewegliches inneres Leitblech 36 zugeordnet. Zudem sind in Flußrichtung direkt hinter den starren Leitblechen 34 an sich in der Flußrichtung erstreckenden Innenwänden 40 der Trenneinheit 30 bewegliche äußere Leitbleche 36 vorgesehen, deren Schwenkbereich jedoch nur halb so groß ist, wie der der innenliegenden schwenkbaren Leitbleche 36. Dadurch, daß die äußeren starren Leitbleche 34 nicht mit einem beweglichen Leitblech 36 versehen sind, wird auch dann nicht der Gutstrom in den Randbereichen, d. h. zwischen den Innenwänden 40 und dem jeweils vorletzten starren Leitblech 34 unvertretbar abgebremst, wenn das erste bewegliche Leitblech 36 seine Endstellung nahe der Innenwand 40 eingenommen hat.

Um zu vermeiden, daß sich zwischen den äußeren, d. h. den an den Innenwänden 40 angebrachten beweglichen Leitblechen 36 und den Innenwänden 40 ansammelndes Gut den Schwenkbereich der äußeren beweglichen Leitbleche 36 einschränkt, sind - dies ist jedoch nicht zeichnerisch dargestellt - die Gelenke 38 der äußeren beweglichen Leitbleche 36 mit Abstand zu den Innenwänden 40 angebracht, wobei der Abstand zwischen den Innenwänden 40 und den Gelenken 38 mittels einer Blende verschlossen ist.

In Figur 4 ist gezeigt, auf welche Weise die Verstellung der beweglichen Leitbleche 36 erfolgt, wobei die ganz außen gelegenen und die in der Mitte gelegene Stellung(en) strichpunktiert angegeben sind.

Zur Verstellung aller beweglichen Leitbleche 36 sind im wesentlichen ein Verstellelement 42 in der Form einer Stange oder eines L-Profilstahls, eine Lasche 44 mit einem Längsschlitz 46 und eine Feder 48 vorgesehen.

Das Verstellelement 42 enthält einen Kugelzapfen 50 und ist über diesen und ein Gestänge 62 in der Form eines Bowdenzugs an einen in zwei Richtungen linear steuerbaren elektrischen Motor 64 angelenkt. Der Motor 64 selbst steht über Steuerleitungen 66 mit der Regeleinrichtung 14 in Verbindung. Das Verstellelement 42 trägt zudem vertikal oder annähernd vertikal ausgerichtete Bolzen 52, von denen jeweils einer an einem beweglichen Leitblech 36 angreift. Diese Bolzen 52 erstrecken sich durch kreisbogenförmig verlaufende Schlitze 54 in dem Boden 56 (Fig. 3) der Trenneinheit 30 und lassen so eine Verstellung der oberhalb des Bodens 56 angeordneten beweglichen Leitbleche 36 durch das unterhalb des Bodens 56 bewegliche Verstellelement 42 zu.

Die Lasche 44 greift einenends ebenfalls mittels einem Bolzen 52 an einem äußeren beweglichen Leitblech 36 an und nimmt in ihrem Längsschlitz 46 einen auf dem Verstellelement 42 befestigten Stift 58 in sich auf.

Die vorgespannte Feder 48 greift einenends am Boden 56 und anderenends an der Lasche 44 jeweils über einen Stift 60 an und ist derart ausgebildet bzw. angeordnet, daß die Lasche 44 und mit ihr das äußere bewegliche Leitblech 36 stets auf die ihnen zugeordnete Innenwand 40 zubewegt wird, so daß der Stift 58 immer an dem einen Ende des Längsschlitzes 46 anliegt.

Wird das Verstellelement 42 mit Blick auf Figur 4 nach rechts bewegt, dann schwenken alle beweglichen Leitbleche 36 entgegen dem Uhrzeigerdrehsinn; dabei liegt der Stift 58 am Ende des Längsschlitzes 46 an, und die Lasche 44 nimmt über den Bolzen 52 das äußerste Leitblech 36 mit, wobei die Feder 48 gespannt wird.

Wird hingegen das Verstellelement 42 mit Blick auf Figur 4 vollständig nach links bewegt, dann schwenken zwar die innenliegenden beweglichen Leitbleche 36 bis sie maximal ihre linksaußen angedeutete Stellung erreicht haben - das äußerste bewegliche Leitblech 36 kommt jedoch an der Innenwand 40 zur Anlage, sobald die innenliegenden beweglichen Leitbleche 36 ihre Mittenstellung überschreiten. Eine Verspannung zwischen der Lasche 44 und dem Verstellelement 42 wird dadurch vermieden, daß sich der Stift 58 innerhalb des Längsschlitzes 46 weiterbewegen kann, sobald das äußerste bewegliche Leitblech 36 an der Innenwand 40 zur Anlage gekommen ist. Außerdem entspannt sich die Feder 48 teilweise oder vollkommen, wenn sich das äußerste bewegliche Leitblech 36 auf die Innenwand 40 zubewegt. Wenn es in Figur 4 auch nicht dargestellt ist, so ist auf der anderen Seite der Trenneinrichtung 28 ebenfalls ein bewegliches Leitblech 36 an der Innenwand 40 der Trenneinheit 30 angebracht, das spiegelbildlich zu dem zuvor beschriebenen bewegt wird.

Aus Figur 3 ist zu entnehmen, daß die beweglichen Leitbleche 36 ein Bodenelement 37 aufweisen, das sich rechtwinklig zu der Leitfläche des Leitbleches 36 und parallel zu der Auflagefläche des Gutstroms erstreckt. Diese Bodenelemente 37 weisen Querrippen auf, wie sie auch auf dem Boden 56 zu finden sind und die bei der oszillierenden Bewegung der Trenneinheit 30 eine Mitnahme des Gutstroms garantieren.

Die Sensoren 18 und 20 können, soweit sie Parameter des Gutstromes erfassen, sowohl im Bereich der beweglichen als auch im Bereich der starren Leitbleche 34 vorgesehen sein; ihre Anordnung ist jedenfalls so zu wählen, daß bei der Überleitung des Gutstromes von der Trenneinheit 30, also der stromaufwärts gelegenen, auf die Trenneinheit 32, also der stromabwärts gelegenen, eine Umlenkung und Verteilung des Gutstromes erfolgt, die gewährleistet, daß spätestens auf der stromabwärts gelegenen Trenneinheit 32 eine gleichmäßige oder annähernd gleichmäßige Gutstromhöhe herrscht.

Diese Funktion stellt einen erheblichen Vorteil gegenüber anderen bekannten Trenneinrichtungen dar, da dort vielmals eine Umverteilung des Gutstroms erst auf der stromabwärts gelegenen Trenneinheit und somit zu spät erfolgt.

Die Regeleinrichtung 14 kann sich sowohl auf einer Bedienungsplattform als auch direkt an der Trenneinrichtung 28 befinden.

Aus dem vorstehend Beschriebenen ergibt sich folgender Verfahrensablauf am Beispiel eines Mähdreschers.

Die im Bereich der Trenneinheit 30, vorzugsweise im Bereich zwischen den Innenwänden 40 und den äußeren starren oder beweglichen Leitblechen 34 oder 36 angeordneten Sensoren 18 und 20 der Meßeinrichtung 12 stellen beispielsweise fest, daß die Gutstromhöhe auf der mit Blick auf die Figuren 3 und 4 linken Seite größer ist als auf der rechten und bilden daraus entsprechende Signale, deren Beträge sich unterscheiden und leiten diese an die Regeleinrichtung 14 weiter. Aufgrund des Datenverarbeitungsprogramms, das der Funktion der Regeleinrichtung 14 zugrundeliegt, entwickelt die Regeleinrichtung 14 ein Ausgangssignal für den mit dem Verstellelement 42 verbundenen Motor 64, das bewirkt, daß das Verstellelement 42 und die Lasche 44 nach rechts bewegt werden und sowohl die inneren beweglichen Leitbleche 36, als auch das an der linken Innenwand 40 befestigte bewegliche äußere Leitblech 36 entgegen dem Uhrzeigerdrehsinn verschwenken, so daß auf der linken Seite der Trenneinheit 30 übermäßig vorhandenes Gut um einen bestimmten Betrag nach rechts versetzt auf die stromabwärts gelegene Trenneinheit 32 gefördert wird. Da sich an die äußeren starren Leitbleche 34 entweder gar keine oder, was nicht gezeigt ist, sehr kurze, bewegliche Leitbleche 36 anschließen, da gemäß Figur 2 die stromaufwärts gelegene Trenneinheit 30 oberhalb der stromabwärts gelegenen Trenneinheit 32 endet, und da beide Trenneinheiten 30 und 32 eine oszillierende Bewegung in der Vertikalebene vollführen, findet beim Übergang von der stromaufwärts auf die stromabwärts gelegene Trenneinheit 30, 32 eine weitere Verteilung des Gutstromes statt, so daß der Gutstrom zwar nach einer Seite versetzt aber nicht ungleichmäßig auf die stromabwärts gelegene Trenneinheit 32 übergeleitet wird.

Es ist bemerkenswert, daß eine optimale Gutstromführung insbesondere dann erreicht wird, wenn ausgehend von der Erfassung der seitlichen Neigung der Trenneinrichtung 28 bereits bei einer Neigung von 5 % die beweglichen Leitbleche 36 eine ihrer äußersten Stellungen eingenommen haben.

Die Verstellung der beweglichen Leitbleche 36 in Abhängigkeit von den Werten der erfaßten Parameter kann in ihrer Empfindlichkeit und in ihren Grenzwerten durch entsprechende Gestaltung des in der Regeleinrichtung 14 geladenen und von einem Rechner, vornehmlich auf Mikroprozessorbasis, ausgeführten Computerprogramms beeinflußt werden.

## Patentansprüche

1. Trenneinrichtung (28) für eine Erntemaschine, insbesondere für einen Mähdrescher, mit Leitblechen (36), die schwenkbar auf einer ersten Trenneinheit (30) gelagert sind, über ein gemeinsames Verstellelement (42) miteinander verbunden sind und in Abhängigkeit von Signalen aus einer Regeleinrichtung (14) einen Gutstrom beim Übergang auf eine stromabwärts folgende zweite Trenneinheit (32) umlenken, dadurch gekennzeichnet, daß
a) ein fernsteuerbarer Motor (64) für das Verstellelement (42) vorgesehen ist,
b) das Verstellelement (42) unterhalb und an der Trenneinheit (30) angebracht ist,
c) die Leitbleche (36) über das Verstellelement (42) verstellbar sind, wozu an dem Verstellelement (42) Bolzen (52) vorgesehen sind, die sich durch Schlitze (54) in einem Boden (56) der Trenneinheit (30) erstrecken und an den Leitblechen (36) angreifen, wobei
d) an den Leitblechen (36) vorgesehene Bodenelemente (37) und/oder das Verstellelement (42) so ausgebildet sind, daß in jeder Stellung der Leitbleche die (36) die Schlitze (54) verschlossen sind.

2. Trenneinrichtung nach Anspruch 1, dadurch gekennzeichnet, daß zumindest zwei, insbesondere in sich gegenüberliegenden Seitenbereichen des Gutstroms angeordnete Sensoren zur Erfassung jeweils
a) der Schichthöhen des Gutstromes,
b) der Flächenlasten des Gutstromes auf die Trenneinrichtung (28),
c) der Gutstromdichten,
d) der für die Förderung erforderlichen Kräfte oder
e) der Gutstromverluste
vorgesehen sind.

3. Trenneinrichtung nach Anspruch 2, dadurch gekennzeichnet, daß bei einer Trenneinrichtung (28) mit Luftabscheidung eines Teilgutstromes Sensoren (18, 20) zur Erfassung des Luftdruckes zum Durchdringen des Gutstromes vorgesehen sind.

4. Trenneinrichtung nach Anspruch 2, dadurch gekennzeichnet, daß bei einer Trenneinrichtung (28) mit Abscheidung eines Teilgutstromes aus unerwünschtem Gut Sensoren (18, 20) zur Erfassung von erwünschtem Gut innerhalb des abgeschiedenen Teilgutstromes in oder am Endbereich der Trenneinrichtung (28) vorgesehen sind.

5. Trenneinrichtung nach Anspruch 1, dadurch gekennzeichnet, daß zur Bildung der Signale ein Rechner auf Mikroprozessorbasis vorgesehen ist.

6. Trenneinrichtung nach Anspruch 5, dadurch gekennzeichnet, daß der Rechner programmierbar ist.

7. Trenneinrichtung nach einem oder mehreren der vorherigen Ansprüuche, dadurch gekennzeichnet, daß der Motor (64) elektrisch, hydraulisch oder pneumatisch wirkt.

8. Trenneinrichtung nach einem oder mehreren der vorherigen Ansprüche, gekennzeichnet durch mehrere in Reihe geschaltete Trenneinheiten (30, 32), wobei eine stromaufwärts vorgesehene Trenneinheit (30) mit quer zur Flußrichtung des Gutstromes beweglichen Leitblechen (36) versehen ist, und den beweglichen Leitblechen (36) stromaufwärts starr befestigte Leitbleche (34) vorgeschaltet sind.

9. Trenneinrichtung nach Anspruch 8, dadurch gekennzeichnet, daß jedem beweglichen Leitblech (36) ein starres Leitblech (34) vorgeschaltet ist.

10. Trenneinrichtung nach Anspruch 8, dadurch gekennzeichnet, daß bei mehreren starr angebrachten Leitblechen (34) den in Flußrichtung äußeren starr angebrachten Leitblechen (34) kein bewegliches Leitblech (36) nachgeschaltet ist.

11. Trenneinrichtung nach Anspruch 8 oder 9, dadurch gekennzeichnet, daß bei mehreren starr angebrachten Leitblechen (34) den in Flußrichtung äußeren, starr angebrachten Leitblechen (34) ein gegenüber den anderen beweglichen Leitblechen (36) kürzeres bewegliches Leitblech (36) nachgeschaltet ist.

12. Trenneinrichtung nach einem oder mehreren der Ansprüche 8 bis 11, dadurch gekennzeichnet, daß an Innenwänden (40) der Trenneinheit (30) jeweils ein äußeres bewegliches Leitblech (36) angebracht ist, das über einen Teil des Schwenkbereichs der inneren beweglichen Leitbleche (36) beweglich ist.

13. Trenneinrichtung nach einem oder mehreren der vorherigen Ansprüche, dadurch gekennzeichnet, daß die beweglichen Leitbleche (36) mit profilierten Bodenelementen (37) zur Unterstützung der Förderwirkung auf den Gutstrom versehen sind.

14. Trenneinrichtung nach einem oder mehreren der vorherigen Ansprüche, dadurch gekennzeichnet, daß das Verstellelement (42) über eine mit einem Längsschlitz (46) versehene Lasche (44) mit jeweils einem äußeren beweglichen Leitblech (36) verbunden ist, wobei die äußeren beweglichen Leitbleche (36) mittels einer Feder (48) zur Anlage an die Innenwände (40) gedrängt werden.

15. Trenneinrichtung (16) nach Anspruch 14, dadurch gekennzeichnet, daß die Lasche (44) so ausgebildet ist, daß sie in jeder Stellung die Schlitze (54) verschließt.

16. Trenneinrichtung nach einem oder mehreren der vorherigen Ansprüche, dadurch gekennzeichnet, daß die beweglichen Leitbleche (36) an ortsfesten Gelenken (38) angelenkt sind, wobei die Gelenke (38) der beweglichen äußeren Leitbleche (36) mit Abstand zu den Innenwänden (40) angeordnet sind.

## Claims

1. A separating device (28) for a harvesting machine, especially a combine harvester, with guide plates (36) which are mounted pivotally in a first separating unit (30), are connected together by a first adjusting member (42) and divert a stream of material in dependence on signals from a control device (14) at the transition to a following, downstream second separating unit (32), characterized in that
a) a remote controlled motor (64) is provided for the adjusting member (42),
b) the adjusting member (42) is fitted underneath and on the separating unit (30),
c) the guide plates (36) can be adjusted by the adjusting member (42), wherefor pins (52) are provided on the adjusting member (42), the pins extending through slots (54) in a bottom (56) of the separating unit (30) and engage on the guide plates (36), wherein
d) bottom members (37) provided on the guide plates (36) and/or the adjusting member (42) are so designed that the slots (54) are closed in all positions of the guide plates (36).

2. A separating device according to claim 1, characterized in that at least two sensors, especially arranged on opposite side regions of the stream of material, are provided to detect
a) the height of the layer of the stream of material,
b) the area loading of the stream of material on the separating device (28),
c) the density of the stream of material,
d) the force needed for the conveying, or
e) the losses from the stream of material.

3. A separating device according to claim 2, characterized in that sensors (18, 20) are provided to detect the air pressure for penetrating the stream of material in a separating device (28) with air separation of a component stream of material.

4. A separating device according to claim 2, characterized in that sensors (18, 20) for detecting unwanted material within the separated component stream of material are provided in or at the end region of the separating device (28) in a separating device (28) with separation of a component stream of unwanted material.

5. A separating device according to claim 1, characterized in that a microprocessor based computer is provided to form the signals.

6. A separating device according to claim 5, characterized in that the computer is programmable.

7. A separating device according to one or more of the preceding claims, characterized in that the motor (64) operates electrically, hydraulically or pneumatically.

8. A separating device according to one or more of the preceding claims, characterized by a plurality of separating units (30, 32) disposed in series, wherein an upstream separating unit (30) is provided with guide plates (36) movable transverse to the flow direction of the stream of material, and rigidly fixed guide plates (34) are provided upstream of the movable guide plates (36).

9. A separating device according to claim 8, characterized in that a rigid guide plate (34) is disposed ahead of each movable guide plate (36).

10. A separating device according to claim 8, characterized in that, with a plurality of rigidly fitted guide plates (34), the rigidly fitted guide plates (34) to the outside in the flow direction have no movable guide plate (36) provided thereafter.

11. A separating device according to claim 8 or 9, characterized in that with a plurality of rigidly fitted guide plates (34), the rigidly fitted guide plates (34) to the outside in the flow direction have a movable guide plate (36) provided thereafter which is shorter than the other movable guide plates (36).

12. A separating device according to one or more of claims 8 to 11, characterized in that an outer moveable guide plate (36) is fitted to each of the inner walls (40) of the separating unit (30), which is movable over part of the pivotal range of the inner movable guide plates (36).

13. A separating device according to one or more of the preceding claims, characterized in that the movable guide plates (36) are provided with profiled bottom members (37) for supporting the conveying action on the stream of material.

14. A separating device according to one or more of the preceding claims, characterized in that the adjusting member (42) is connected to each outer movable guide plate (36) by a tongue (44) provided with a slot (46), the outer movable guide plates (36) being biased towards abutment with the inner walls (40) by means of a spring (48).

15. A separating device according to claim 14, characterized in that the tongue (44) is so formed that it closes the slots (54) in all positions.

16. A separating device according to one or more of the preceding claims, characterized in that the movable guide plates (36) are hinged to positionally fixed hinges (38), the hinges (38) of the movable outer guide plates (36) being arranged spaced from the inner walls (40).

## Revendications

1. Dispositif de séparation (28) pour une moissonneuse, notamment pour une moissonneuse-batteuse, comportant des chicanes (36), qui sont montées de manière à pouvoir pivoter sur une première unité de séparation (30), sont reliées entre elles par l'intermédiaire d'un élément commun de réglage (42) et, en fonction de signaux provenant d'un dispositif de régulation (14), dévient un écoulement de matière lors du passage à une seconde unité de séparation (32) disposée en aval, caractérisé en ce que
a) il est prévu un moteur télécommandable (64) pour l'élément de réglage (42),
b) l'élément de réglage (42) est disposé au-dessous de et sur l'unité de séparation (30),
c) les chicanes (36) sont réglables au moyen de l'élément de réglage (42), et à cet effet il est prévu, sur l'élément de réglage (42), des goujons (52), qui traversent des fentes (54) ménagées dans un fond (56) de l'unité de séparation (30) et attaquent les chicanes (36),
d) des éléments de fond (37) prévus sur les chicanes (36) et/ou l'élément de réglage (42) étant agencés de manière que les fentes (54) sont fermées, dans n'importe quelle position des chicanes (36).

2. Dispositif de séparation selon la revendication 1, caractérisé en ce qu'il est prévu au moins deux capteurs, disposés notamment dans des zones latérales opposées de l'écoulement de matière, et qui servent à détecter respectivement
a) les hauteurs de couche de l'écoulement de matière,
b) les charges superficielles appliquées par l'écoulement de matière au dispositif de séparation (28),
c) les densités de l'écoulement de matière,
d) les forces nécessaires pour le transport, ou
e) les pertes de l'écoulement de matière.

3. Dispositif de séparation selon la revendication 2, caractérisé en ce que dans le cas d'un dispositif de séparation (28) comportant une séparation par air d'un écoulement partiel de matière, il est prévu des capteurs (18,20) servant à détecter la pression de l'air destinée à traverser l'écoulement de matière.

4. Dispositif de séparation selon la revendication 2, caractérisé en ce que dans le cas d'un dispositif de séparation (28) avec séparation d'un écoulement partiel de matière par rapport à une matière indésirable, il est prévu des capteurs (18,20) servant à détecter la matière désirée, à l'intérieur de l'écoulement partiel de matière séparé, dans ou au niveau de la zone d'extrémité du dispositif de séparation (28).

5. Dispositif de séparation selon la revendication 1, caractérisé en ce qu'un ordinateur réalisé sur la base d'un microprocesseur est prévu pour la formation de signaux.

6. Dispositif de séparation selon la revendication 5, caractérisé en ce que l'ordinateur est programmable.

7. Dispositif de séparation selon une ou plusieurs des revendications précédentes, caractérisé en ce que le moteur (64) agit électriquement, hydrauliquement, pneumatiquement.

8. Dispositif de séparation selon une ou plusieurs des revendications précédentes, caractérisé par plusieurs unités de séparation (30,32) branchées en série, une unité de séparation (30) prévue en aval étant équipée de chicanes (36) qui sont déplaçables transversalement par rapport à la direction de déplacement de l'écoulement de matière, tandis que des chicanes (34) fixées rigidement sont montées en amont des chicanes mobiles (36).

9. Dispositif de séparation selon la revendication 8, caractérisé en ce qu'une chicane fixe (34) est disposée en amont de chaque chicane mobile (36).

10. Dispositif de séparation selon la revendication 8, caractérisé en ce que dans le cas de plusieurs chicanes (34) montées rigidement, aucune chicane mobile (36) n'est installée en aval des chicanes (34) montées rigidement et situées à l'extérieur dans la direction de l'écoulement.

11. Dispositif de séparation selon la revendication 8 ou 9, caractérisé en ce que, dans le cas de plusieurs chicanes (34) montées rigidement, une chicane mobile (36), plus courte que les autres chicanes mobiles (36), est montée en aval des chicanes fixées rigidement (36), qui sont extérieures dans la direction de l'écoulement.

12. Dispositif de séparation selon une ou plusieurs des revendications 8 à 11, caractérisé en ce que sur les parois intérieures (40) de l'unité de séparation (30) est montée respectivement une chicane extérieure mobile (36), qui est déplaçable sur une partie de la plage de pivotement des chicanes intérieures mobiles (36).

13. Dispositif de séparation selon une ou plusieurs des revendications précédentes, caractérisé en ce que les chicanes mobiles (36) sont équipées d'éléments de fond profilés (37) pour assister l'action de transport appliquée à l'écoulement de matière.

14. Dispositif de séparation selon une ou plusieurs des revendications précédentes, caractérisé en ce que l'élément de réglage (42) est relié, par l'intermédiaire d'une patte (44) pourvue d'une fente longitudinale (46) respectivement à une chicane extérieure mobile (36), les chicanes extérieures mobiles (36) étant repoussées au moyen d'un ressort (48) de manière à s'appliquer contre les parois intérieures (40).

15. Dispositif de séparation (16) selon la revendication 14, caractérisé en ce que la patte (44) est agencée de telle sorte que, dans n'importe quelle position, elle ferme les fentes (54).

16. Dispositif de séparation selon une ou plusieurs des revendications précédentes, caractérisé en ce que les chicanes mobiles (36) sont articulées au niveau d'articulations fixes (38), les articulations (38) des chicanes extérieures mobiles (36) étant disposées à distance des parois intérieures (40).
